# EUROPEAN PATENT APPLICATION

(11) **EP 4 748 748 A1**
(43) Date of publication of application: **27.05.2026**
(21) Application number: 25209081.6
(22) Date of filing: 16.10.2025
(51) Int. Cl.: B65G 1/04, B07C 3/02, B65G 13/11, B65G 37/02

(54) **CONVEYOR SYSTEM**

(30) Priority: 20.11.2024 US 202418953920
(71) Applicant: Intelligrated Headquarters LLC, Mason, OH 45040 (US)
(72) Inventor: ROCHAT, Alex, Charlotte, 28202 (US); HOLDCROFT, Raymond Peter, Charlotte, 28202 (US); THERON, Quinton Eduard, Charlotte, 28202 (US)
(74) Representative: Haseltine Lake Kempner LLP

(57) **Abstract**

A conveyor system is disclosed. The conveyor system comprising a plurality of conveyor modules. Further, each of the plurality of conveyor modules comprises a first plate comprising a first surface defining a plurality of cavities, and a plurality of omnidirectional wheel assemblies that each comprise an omnidirectional wheel that is positioned within a respective cavity of the plurality of cavities and configured to transfer one or more objects in one or more directions, and a second plate coupled to a second surface of the first plate. Further, the second plate comprises a plurality of sides, and a plurality of connectors, each connector coupled to a respective side of the plurality of sides. Further, each connector is configured to detachably attach a conveyor module with another conveyor module of the plurality of conveyor modules.

## Description

### TECHNOLOGICAL FIELD

Example embodiments of the present disclosure relate generally to a conveyor, and more particularly, to a conveyor system and a method thereof.

### BACKGROUND

In the retail industry, stock taking and replenishment of on-shelf products are traditionally conducted through manual processes. Such manual processes are not only labor-intensive but are also time-consuming, leading to inefficiencies and increased operational costs. Manual processes may cause stock management issues, such as misplaced items and slow replenishment, which may result in lost sales due to stock outs.

The inventors identified numerous deficiencies and problems in in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a conveyor system is disclosed. The conveyor system comprising a plurality of conveyor modules. Further, each of the plurality of conveyor modules comprises a first plate comprising a first surface defining a plurality of cavities, and a plurality of omnidirectional wheel assemblies that each comprise an omnidirectional wheel that is positioned within a respective cavity of the plurality of cavities and configured to transfer one or more objects in one or more directions, and a second plate coupled to a second surface of the first plate. Further, the second plate comprises a plurality of sides, and a plurality of connectors, each connector coupled to a respective side of the plurality of sides. Further, each connector is configured to detachably attach a conveyor module with another conveyor module of the plurality of conveyor modules.

In some embodiments, the first plate corresponds to an upper plate and the second plate corresponds to a lower plate.

In some embodiments, each connector comprises at least two adjustable rings. Further, one of the at least two adjustable rings is connected to the second plate of the conveyor module and another of the at least two adjustable rings is connected to a second plate of the another conveyor module.

In some embodiments, each of the plurality of omnidirectional wheel assemblies comprises a housing. Further, the omnidirectional wheel is positioned partially within the housing, and a gear assembly or a spherical wheel assembly to provide rotational movement to the omnidirectional wheel.

In some embodiments, each of the plurality of omnidirectional wheel assemblies comprises the gear assembly, the gear assembly comprises a first motor that is configured to rotate a gear, and the gear is configured to rotate the omnidirectional wheel on a horizontal axis.

In some embodiments, the first motor, the gear, and the omnidirectional wheel are vertically aligned, and each of the plurality of omnidirectional wheel assemblies comprises a second motor that is configured to collectively rotate the first motor, the gear, and the omnidirectional wheel on a vertical axis. In some embodiments, each of the plurality of omnidirectional wheels comprise an indentation. Further, each gear is configured to mesh with the indentation of a respective omnidirectional wheel.

In some embodiments, each of the plurality of omnidirectional wheel assemblies comprises the spherical wheel assembly. Further, the spherical wheel assembly comprises a plurality of linking rods, a plurality of spherical wheels, each of the plurality of spherical wheels being rotatably coupled to a respective linking rod, and a first motor configured to rotate at least one of the spherical wheels. Further, the plurality of linking rods are radially positioned within the housing to form a base for the omnidirectional wheel.

In some embodiments, the at least one of the spherical wheels that is configured to be rotated by the first motor is configured to rotate on a horizontal axis. Further, the spherical wheel assembly comprises a second motor that is configured to collectively rotate the plurality of linking rods and the plurality of spherical wheels on a vertical axis. In some embodiments, each of the spherical wheels have a textured surface that corresponds to a textured surface of the omnidirectional wheel that is configured to provide a grip for moving the omnidirectional wheel.

In some embodiments, each of the plurality of conveyor modules comprises an actuator positioned at each corner of the second plate and in contact with a lower surface of the first plate, and at least one tilt sensor. Further, the actuator at each corner of the second plate is configured to adjust an angle of the first plate based at least on signals generated by the at least one tilt sensor.

In some embodiments, each of the plurality of conveyor modules comprises a plurality of motorized tracks, each motorized track being positioned on a different side of the second plate, and a plurality of lifting arms, each lifting arm being coupled to a respective motorized track and to the second surface. Further, the motorized tracks are configured to move the plurality of lifting arms to vertically lift the first plate to adjust height of the conveyor module.

In another example embodiment, a method is disclosed. The method comprising coupling a second plate to a second surface of a first plate to form a conveyor module. Further, the conveyor module comprising the first plate comprising a first surface defining a plurality of cavities, and a plurality of omnidirectional wheel assemblies that each comprise an omnidirectional wheel that is positioned within a respective cavity of the plurality of cavities and configured to transfer one or more objects in one or more directions, and the second plate comprises a plurality of sides, and a plurality of connectors, each connector coupled to a respective side of the plurality of sides. Further, each connector is configured to detachably attach a conveyor module with another conveyor module of the plurality of conveyor modules.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIGS. 1A-1C illustrate isometric views of a conveyor module of a conveyor system in accordance with an example embodiment of the present disclosure;
FIG. 2A illustrates an isometric view of an omnidirectional wheel assembly in accordance with an example embodiment of the present disclosure;
FIG. 2B illustrates a sectional view of the omnidirectional wheel assembly of FIG. 2A in accordance with an example embodiment of the present disclosure;
FIG. 2C illustrates another sectional view of the omnidirectional wheel assembly of FIG. 2A in accordance with an example embodiment of the present disclosure;
FIG. 3A illustrates an isometric view of an omnidirectional wheel assembly in accordance with an example embodiment of the present disclosure;
FIGS. 3B-3C illustrate sectional views of the omnidirectional wheel assembly of FIG. 3A in accordance with an example embodiment of the present disclosure;
FIG. 4A illustrates an exploded view of the omnidirectional wheel assembly of FIG. 3A in accordance with an example embodiment of the present disclosure;
FIG. 4B illustrates an expanded view of a spherical wheel assembly of the omnidirectional wheel assembly of FIG. 3A in accordance with an example embodiment of the present disclosure;
FIG. 5 illustrates an exploded view of a conveyor module of a conveyor system in accordance with an example embodiment of the present disclosure;
FIGS. 6A-6C illustrate adjustment of a tilt angle of the conveyor module of the conveyor system of FIG. 5 in accordance with an example embodiment of the present disclosure;
FIGS. 7A-7C illustrate height adjustment of a plurality of conveyor modules of a conveyor system, in accordance with an example embodiment of the present disclosure;
FIGS. 8A-8B illustrate a first application of the conveyor system in accordance with a first example embodiment of the present disclosure;
FIG. 9 illustrates a second application of the conveyor system in accordance with a second example embodiment of the present disclosure; and
FIG. 10 illustrates a third application of the conveyor system in accordance with a third example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a conveyor system is disclosed. Embodiments of the present disclosure may comprise a plurality of conveyor modules. Each of the plurality of conveyor modules may comprise a first plate comprising a first surface that may define a plurality of cavities. Embodiments of the present disclosure may comprise a plurality of omnidirectional wheel assemblies that each comprise an omnidirectional wheel that may be positioned within a respective cavity of the plurality of cavities and may be configured to transfer one or more objects in one or more directions. Embodiments of the present disclosure may comprise a second plate coupled to a second surface of the first plate. The second plate may comprise a plurality of sides, and a plurality of connectors, each connector may be coupled to a respective side of the plurality of sides. Each connector may be configured to detachably attach a conveyor module with another conveyor module of the plurality of conveyor modules.

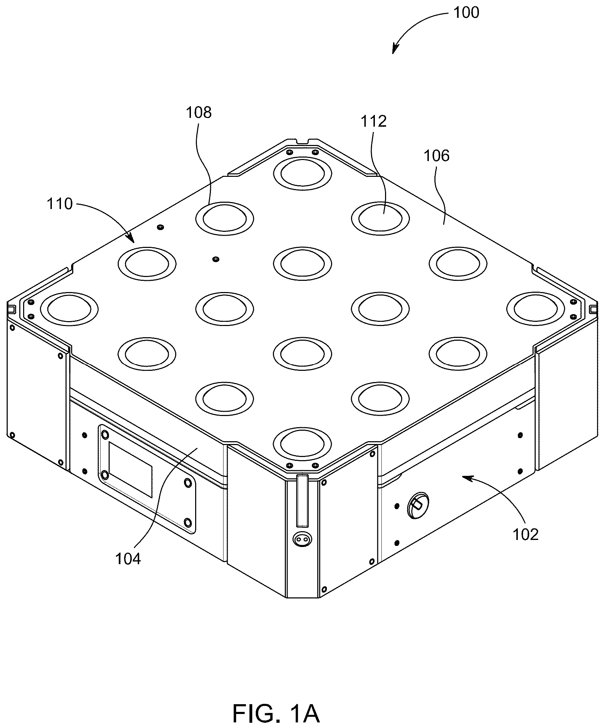

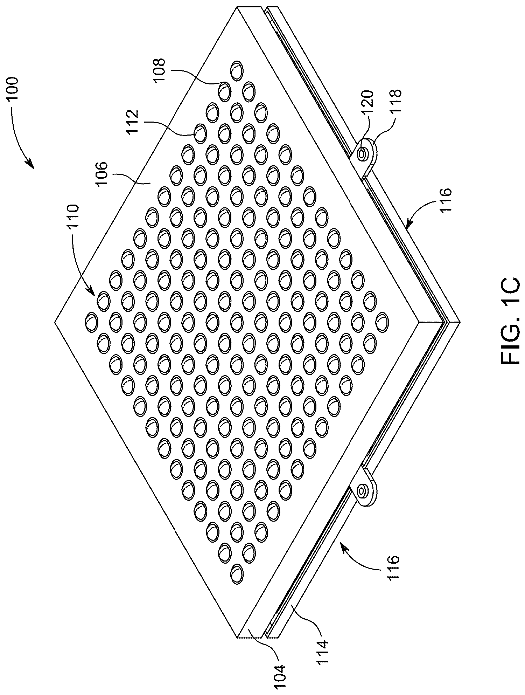

FIGS. 1A-1C illustrate isometric views of a conveyor module 100 of a conveyor system 700, in accordance with an example embodiment of the present disclosure.

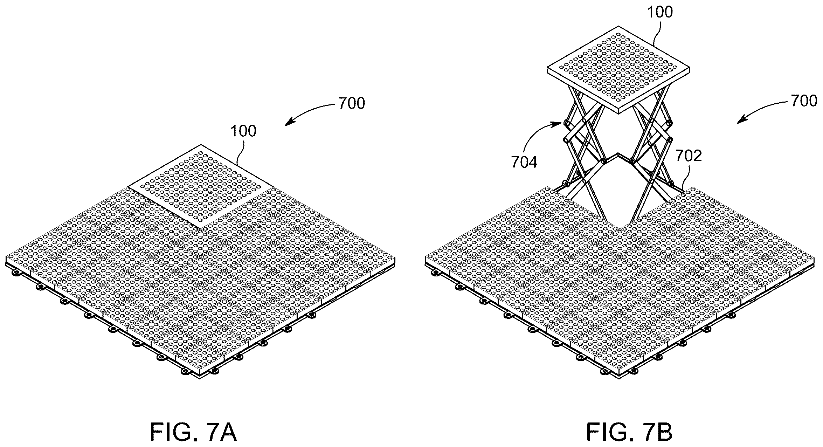

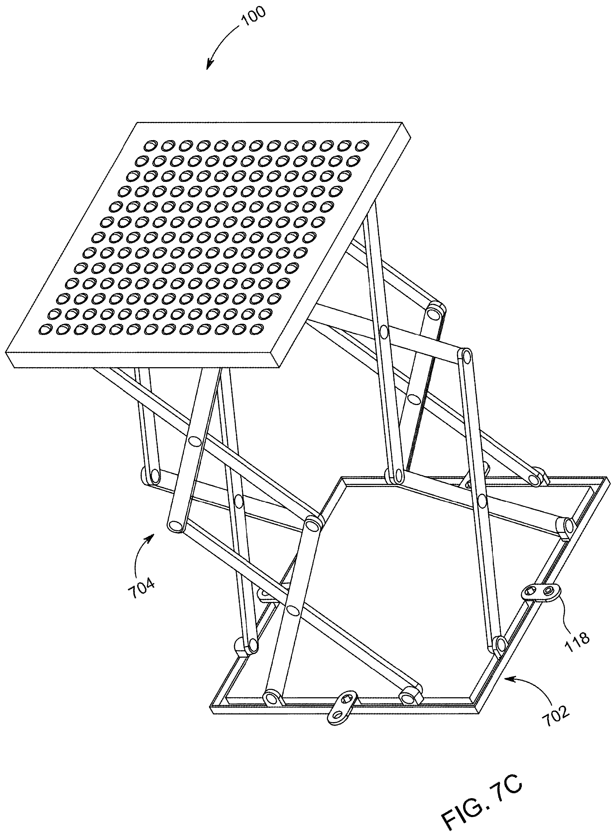

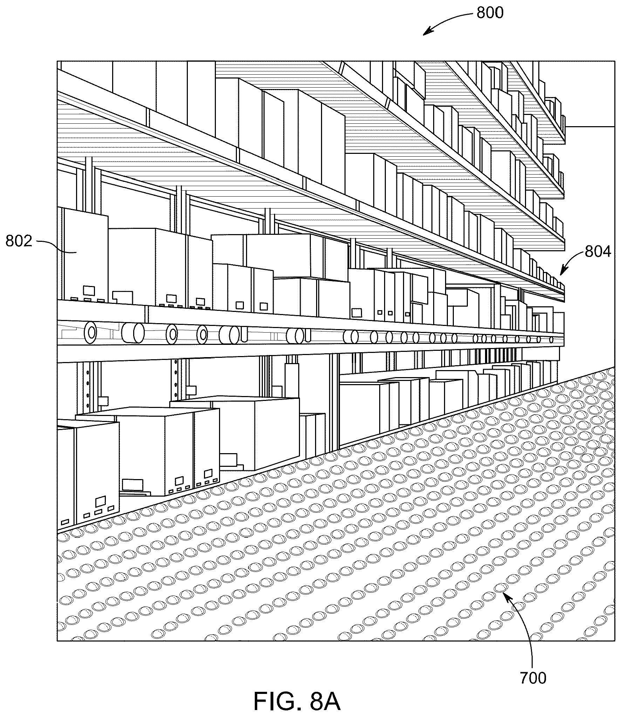

In some embodiments, the conveyor system 700 (FIG. 7A) may comprise a plurality of conveyor modules. In some embodiments, the conveyor system 700 may be installed within various facilities 800 (FIGS. 8A-10). The facilities 800 may include, but are not limited to, a manufacturing plant, a warehouse, an inventory, etc. In some embodiments, the conveyor system 700 may be configured to transport one or more objects 802 (FIG. 8A) from one location within a facility 800 of the various facilities to an another location within the facility 800. In some embodiments, the one or more objects 802 may correspond to one or more packages or one or more cartons. In some embodiments, the conveyor system 700 may be configured to translate the one or more objects 802 in one or more directions (e.g., a X-direction and/or in a Y-direction). In various examples, the conveyor system 700 may be installed on a floor of the facility or above the floor of the facility.

In some embodiments, the conveyor module 100 of each of the plurality conveyor modules may be configured to translate the one or more objects 802 from the one location to the another location. In some embodiments, each of the conveyor module 100 of the plurality of modules may be interconnected to form the conveyor system 700. In some embodiments, each of the conveyor module 100 may be configured to separately translate the one or more objects 802 in a separate direction. In some embodiments, each of the conveyor module 100 of the conveyor system 700 may be connected with a power source (not shown). In some embodiments, the power source may be configured to provide an input voltage to each of the conveyor module 100. In some embodiments, each of the conveyor module 100 may be arranged in a certain order to translate the one or more objects 802 in a designated direction.

In some embodiments, each of the conveyor module 100 may comprise a casing 102. In some embodiments, the casing 102 of each of the conveyor module 100 may be configured to provide protection to internal components (e.g., motors, controllers, bearings, etc.) of each of the conveyor module 100 from various external factors. The external factors may include, but are not limited to, heavy loads, spillage of oils and/or water etc. In some embodiments, the casing 102 of each of the plurality of conveyor modules may be constructed with various shapes. The shapes may include, but are not limited to, cuboidal shape, cubical shape, trapezium shape, etc. In various examples, the shape of the casing 102 may be selected to ensure a proper alignment of the plurality of conveyor modules with the floor of the facility. In some embodiments, the casing 102 of each of the conveyor module 100 may be constructed with various materials. The materials may include, but are not limited to, metal, polycarbonate etc. In some embodiments, the material of the casing 102 may be selected such that the casing 102 of each of the conveyor module 100 may withstand the external factors.

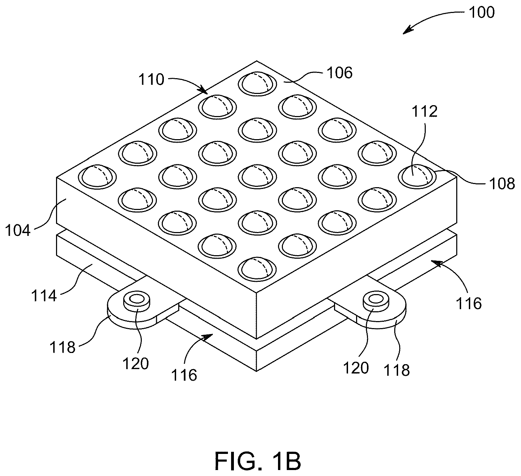

Further, each of the conveyor module 100 of the plurality of conveyor modules may comprise a first plate 104 and a second plate 114 (as illustrated in FIGS. 1B-1C). In some embodiments, the first plate 104 of each of the conveyor module 100 may correspond to an upper plate. In some embodiments, the second plate 114 of the each of the conveyor module 100 may correspond to a lower plate. In some embodiments, the first plate 104 of each of the conveyor module 100 may be arranged on top of the second plate 114. In some embodiments, the first plate 104 may be positioned at a predefined distance from the second plate 114. In some embodiments, the first plate 104 and the second plate 114 of the conveyor module 100 may be constructed with various shapes. The shape of the first plate 104 and the second plate 114 may be a rectangular shape, a square shape, circular shape etc.

In some embodiments, the first plate 104 of each of the conveyor module 100 may comprise a first surface 106 and a second surface (not shown). In some embodiments, the first surface 106 of the first plate 104 may correspond to a top surface of the first plate 104. In some embodiments, the second surface of the first plate 104 may correspond to a bottom surface of the first plate 104. In some embodiments, the first surface 106 of the first plate 104 may be exposed to outer surroundings of each of the plurality of conveyor modules. In some embodiments, the second surface of the first plate 104 may be oriented towards the second plate 114. In various examples, the first surface 106 of the first plate 104 may be coated with an anti-slip coating to prevent slipping of the one or more objects 802 from each of the conveyor module 100 during translation of the one or more objects 802.

In some embodiments, the first surface 106 of the first plate 104 may define a plurality of cavities 108. In some embodiments, each of the plurality of cavities 108 may be crafted on the first surface 106 of the first plate 104 through various processes. The processes may include, but are not limited to, a cutting process, a trimming process, a drilling process etc. In some embodiments, the plurality of cavities 108 may be constructed with various shapes. In some embodiments, the shapes may include, but are not limited to, circular shape, square shape, chamfered shape, oval shape etc. In some embodiments, the plurality of cavities 108 on the first surface 106 of the first plate 104 may be arranged in a specific pattern (e.g., grid pattern, star pattern, circular pattern, etc.). In some embodiments, each of the conveyor module 100 may comprise a plurality of omnidirectional wheel assemblies 110. In some embodiments, each omnidirectional wheel assembly of the plurality of omnidirectional wheel assemblies 110 may be positioned within a respective cavity of the plurality of cavities 108. In some embodiments, each of the plurality of omnidirectional wheel assemblies 110 may be snapped into the plurality of cavities 108 of the first plate 104. In some embodiments, the plurality of omnidirectional wheel assemblies 110 may be configured to transfer the one or more objects 802 in the one or more directions.

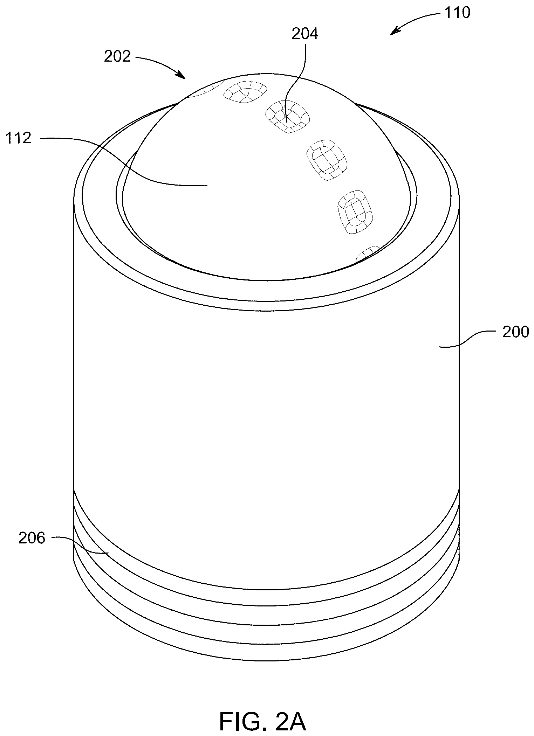

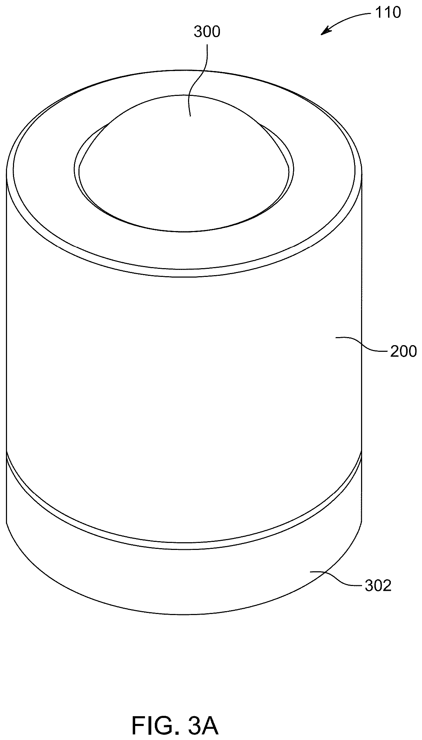

In some embodiments, each of the plurality of omnidirectional wheel assemblies 110 may comprise an omnidirectional wheel 112 that may be positioned at least partially within a respective cavity of the plurality of cavities 108. In some embodiments, each omnidirectional wheel 112 of the plurality of omnidirectional wheel assemblies 110 may be configured to rotate on multiple axes to transfer the one or more objects 802 in the one or more directions. In some embodiments, each of the plurality of omnidirectional wheel assemblies 110 may comprise a gear assembly 202 (FIGS. 2A-2C) or a spherical wheel assembly 304 (FIGS. 3A-3C). In some embodiments, each of the omnidirectional wheel 112 of the plurality of omnidirectional wheel assemblies 110 may be driven by the gear assembly 202 or the spherical wheel assembly 304. In some embodiments, the gear assembly 202 or the spherical wheel assembly 304 may be configured to provide a rotational movement to a respective omnidirectional wheel 112 of the plurality of omnidirectional wheel assemblies 110 to rotate in the multiple axes. In some embodiments, the plurality of omnidirectional wheel assemblies 110 of each of the conveyor modules 100 may be configured to transfer the one or more objects 802 in the one or more directions. In various examples, each of the one or more objects 802 may come in-contact with the omnidirectional wheel 112 of each of the plurality of omnidirectional wheel assemblies 110. Further, each of the omnidirectional wheel 112 of the plurality of omnidirectional wheel assemblies 110 may facilitate in transferring of the one or more objects 802 over the conveyor system 700.

In some embodiments, each conveyor module 100 may comprise the second plate 114. In some embodiments, the second plate 114 of each conveyor module 100 may be coupled to the second surface of the first plate 104. In some embodiments, the second plate 114 of each conveyor module 100 may be positioned parallel to the second surface of the first plate 104. In some embodiments, the second plate 114 of each conveyor module 100 may be positioned in contact with the floor of the facility. In various examples, the second plate 114 of each conveyor module 100 may be coupled with the floor of the facility through various external components (e.g., fasteners, rivets, etc.) and/or adhesive resins etc. In some embodiments, a second plate 114 may be coupled with another second plate (not shown) of another conveyor module (not shown) of the plurality of conveyor modules.

In some embodiments, the second plate 114 of each conveyor module 100 may comprise a plurality of sides 116. Further, the plurality of sides 116 may comprise a front side, a rear side, a left side, and a right side. In some embodiments, each of the conveyor module 100 may comprise a plurality of connectors 118. In some embodiments, each connector of the plurality of connectors 118 may be coupled to a respective side of the plurality of sides 116 of the second plate 114. In some embodiments, each connector of the plurality of connectors 118 may be coupled at a center of a respective side of the plurality of sides 116 of the second plate 114. In some embodiments, each of the plurality of connectors 118 may be configured to detachably attach the conveyor module 100 of the plurality of conveyor modules with another conveyor module of the plurality of conveyor modules. In some embodiments, each of the plurality of connectors 118 may be constructed with an elongated shape such as rectangular shape, cylindrical shape, etc. In some embodiments, each of the plurality of connectors 118 may be constructed with various materials. The materials may include, but are not limited to, stainless steel, aluminum, etc. In some embodiments, each of the plurality of connectors 118 may comprise the at least two adjustable rings 120.

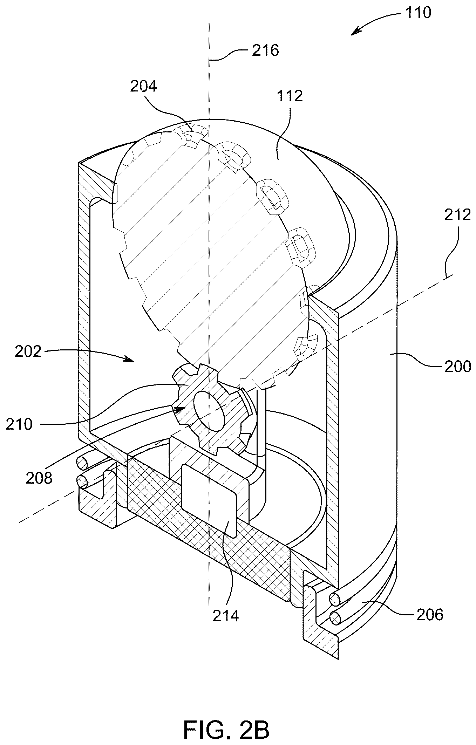

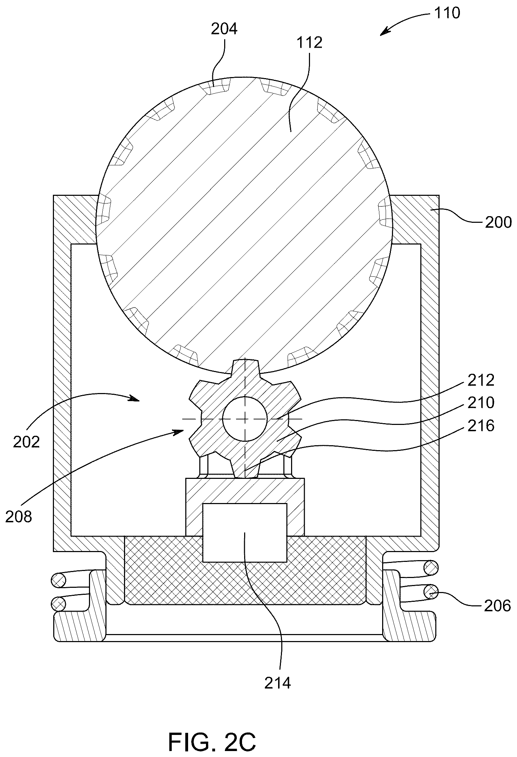

FIG. 2A illustrates anisometric view of the omnidirectional wheel assembly 110, in accordance with an example embodiment of the present disclosure. FIG. 2B illustrates a sectional view of the omnidirectional wheel assembly 110 of FIG. 2A, in accordance with an example embodiment of the present disclosure. FIG. 2C illustrates another sectional view of the omnidirectional wheel assembly 110 of FIG. 2A, in accordance with an example embodiment of the present disclosure.

In some embodiments, the first plate 104 of each conveyor module 100 may comprise a plurality of cavities 108. In some embodiments, each of the plurality of cavities 108 may be configured to contain a respective omnidirectional wheel 112 of a respective omnidirectional wheel assembly 110. In some embodiments, each of the plurality of cavities 108 of the first plate 104 may be configured to accommodate the housing 200. In some embodiments, the omnidirectional wheel 112 of each of the plurality of omnidirectional wheel assemblies 110 may be positioned partially within the housing 200. In some embodiments, the housing 200 may be constructed with various shapes. The shapes may include, but are not limited to, a cylindrical shape, a cuboidal shape, a block shape etc. In some embodiments, the housing 200 may be composed of various materials such as, but are not limited to, stainless steel, aluminum etc. In some embodiments, each omnidirectional wheel 112 may be positioned within a respective housing 200 such that a portion of the omnidirectional wheel 112 protrudes or is exposed out of the housing 200. In some embodiments, the portion of the omnidirectional wheel 112 that protrudes or is exposed out of the housing 200 may comprise an indentation 204.

In some embodiments, the housing 200 may be coupled with a suspension spring 206. In some embodiments, the suspension spring 206 may be positioned on a lower end of the housing 200. In some embodiments, the suspension spring 206 may be configured to damp sudden jerks generated during movement of the one or more objects 802 over the conveyor system 700. In some embodiments, the suspension spring 206 may be constructed with various flexible materials. The materials may include, but are not limited to, rubber, elastomer, silicon etc.

As illustrated in FIG. 2B, the housing 200 may be integrated with the gear assembly 202. In some embodiments, the gear assembly 202 may be operationally coupled with the omnidirectional wheel 112 of the omnidirectional wheel assembly 110. In some embodiments, the gear assembly 202 may be configured to provide the rotational movement to the omnidirectional wheel 112 of the omnidirectional wheel assembly 110 to rotate in the multiple axes. In some embodiments, the gear assembly 202 may comprise a gear 208 and a first motor (not shown). In some embodiments, each omnidirectional wheel 112 that is operationally coupled with a gear assembly 202 may comprise the indentation 204. In some embodiments, an outer surface of the omnidirectional wheel 112 may be constructed with the indentation 204. In various examples, the indentation 204 may be constructed on the omnidirectional wheel 112 on at least one axis (e.g., horizontal axis or vertical axis). In some embodiments, the gear 208 of the gear assembly 202 may comprise a plurality of teeth 210. In some embodiments, the plurality of teeth 210 of the gear 208 may be configured to mesh with the indentation 204 of a respective omnidirectional wheel 112.

In some embodiments, the first motor may be coupled with the gear 208 of the gear assembly 202. In some embodiments, the first motor may be configured to provide a rotational motion to the gear 208 of the gear assembly 202. In some embodiments, the first motor may correspond to an alternate current (AC) motor or a direct current (DC) motor. In some embodiments, the first motor may be coupled with a power source (not shown) that may provide an electric supply to the first motor. In some embodiments, the first motor may be configured to actuate the gear 208 to rotate the gear 208 on a horizontal axis 212 and the omnidirectional wheel 112 on another horizontal axis (e.g., an axis that is parallel to the horizontal axis 212 that the gear 208 rotates on). In some embodiments, when each of the omnidirectional wheel 112 of each of the plurality of conveyor modules rotates on the horizontal axis, then the one or more objects 802 may move in a first direction over the conveyor system 700.

In some embodiments, the first motor, the gear 208, and the omnidirectional wheel 112 may be vertically aligned. In some embodiments, each of the plurality of omnidirectional wheel assemblies 110 may comprise a second motor 214. In some embodiments, the first motor, the gear 208, and the omnidirectional wheel 112 that may be integrated within the housing 200 and may be collectively coupled with the second motor 214. In some embodiments, the second motor 214 may be configured to rotate the first motor, the gear 208, and the omnidirectional wheel 112 on a vertical axis 216. In some embodiments, the second motor 214 may be configured to rotate the first motor, the gear 208, and the omnidirectional wheel 112 collectively to change direction of the rotational motion to the gear 208 of the gear assembly 202. In some embodiments, upon changing of direction of the rotational motion of the gear 208, the first motor may be configured to actuate the gear 208 to rotate the omnidirectional wheel 112 in another axis (e.g., an axis perpendicular to the horizontal axis 212 of the first motor). In some embodiments, when the omnidirectional wheel 112 of each of the plurality of omnidirectional wheel assemblies 110 may rotate in the another axis, then the one or more objects 802 may move in the second direction over the conveyor system 700.

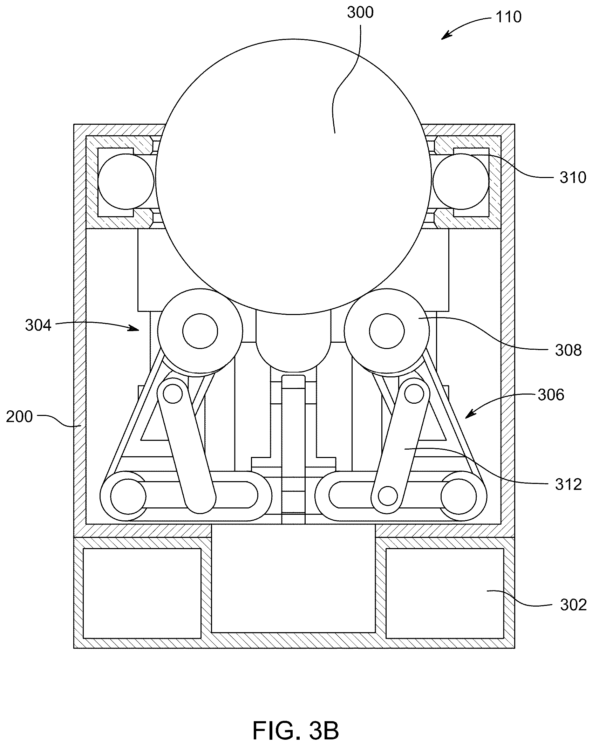

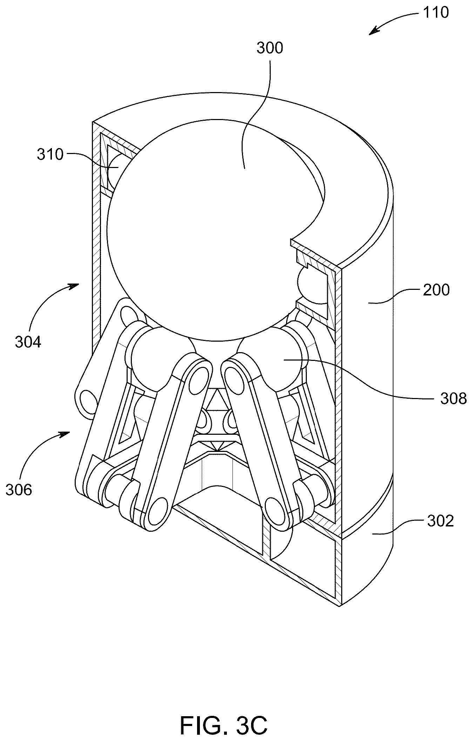

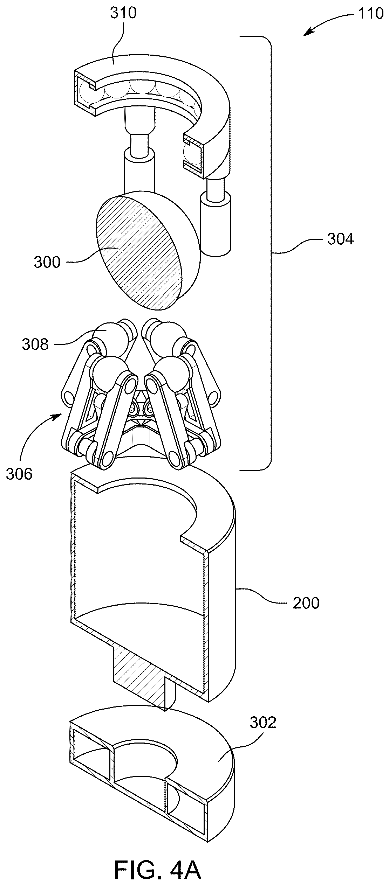

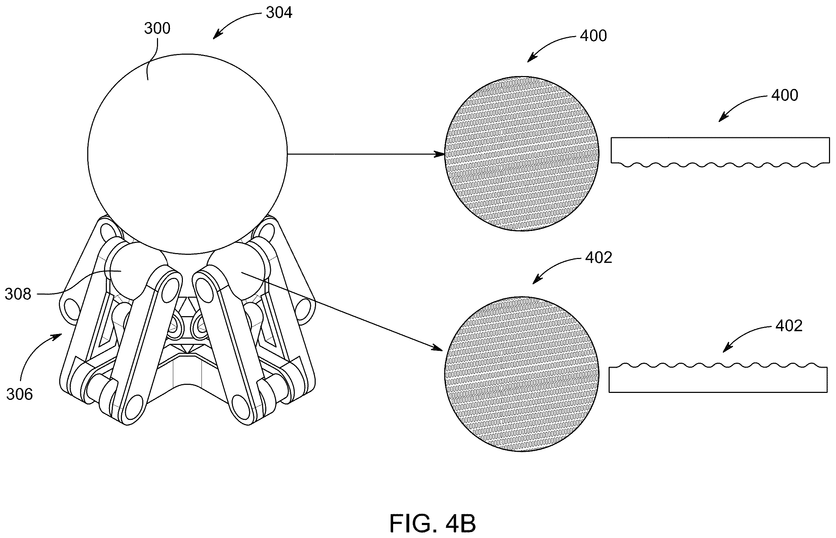

FIG. 3A illustrates an isometric view of the omnidirectional wheel assembly 110spherical wheel assembly 304, in accordance with an example embodiment of the present disclosure. FIGS. 3B-3C illustrate sectional views of the omnidirectional wheel assembly 110 of FIG. 3Aspherical wheel assembly 304, in accordance with an example embodiment of the present disclosure. FIG. 4A illustrates an exploded view of the omnidirectional wheel assembly 110 of FIG. 3Aspherical wheel assembly 304, in accordance with an example embodiment of the present disclosure. FIG. 4B illustrates an expanded view of the spherical wheel assembly 304 of the omnidirectional wheel assembly 110 of FIG. 3A, in accordance with an example embodiment of the present disclosure.

In some embodiments, each of the plurality of omnidirectional wheel assemblies 110 may comprise a spherical wheel assembly 304 (as illustrated in FIG. 3B). In some embodiments, the housing 200 of each omnidirectional wheel assembly 110 may be integrated with a spherical wheel assembly 304. In some embodiments, the spherical wheel assembly 304 may be configured to provide the rotational movement to each of the omnidirectional wheel 300 of the plurality of omnidirectional wheel assemblies 110. In some embodiments, the spherical wheel assembly 304 may be positioned underneath the omnidirectional wheel 300 inside the housing 200. In some embodiments, the housing 200 may comprise a base plate 302. Further, the base plate 302 of the housing 200 may be configured to provide support to the housing 200 when installed within the plurality of cavities 108 of the first plate 104. In some embodiments, the spherical wheel assembly 304 may comprise a plurality of linking rods 306 and a plurality of spherical wheels 308. In some embodiments, each of the plurality of linking rods 306 may be configured to position each of the plurality of spherical wheels 308 in proximity to the omnidirectional wheel 300 inside the housing 200. In some embodiments, each of the plurality of spherical wheels 308 may be rotatably coupled to a respective linking rod. In some embodiments, each of the plurality of linking rods 306 may be radially positioned within the housing 200. The radial positioning of the plurality of linking rods 306 inside the housing 200 may facilitate each of the plurality of spherical wheels 308 to form a base for the omnidirectional wheel 300. In some embodiments, the omnidirectional wheel 300 may be positioned over the base formed by each of the plurality of spherical wheels 308.

In some embodiments, the housing 200 may comprise a ball bearing 310. In some embodiments, the ball bearing 310 may be positioned at a mouth portion of the housing 200. In some embodiments, the ball bearing 310 of the housing 200 may be positioned in contact with the omnidirectional wheel 300. In some embodiments, the ball bearing 310 of the housing 200 may be configured to enable the rotational movement of the omnidirectional wheel 300. In some embodiments, each of the plurality of linking rods 306 may comprise at least one spring 312. Further, the at least one spring 312 of each of the plurality of linking rods 306 may be configured to damp sudden jerks generated during movement of the one or more objects 802 over the conveyor system 700.

As illustrated in FIG. 4B, the omnidirectional wheel 300 of each of the plurality of omnidirectional wheel assemblies 110 that may be operationally coupled with the spherical wheel assembly 304 may comprise a textured surface 400. In some embodiments, each of the plurality of spherical wheels 308 of the spherical wheel assembly 304 may be positioned in contact with the omnidirectional wheel 300 inside the housing 200. In some embodiments, each of the plurality of spherical wheels 308 may also comprise a textured surface 402. In some embodiments, the textured surface 402 of each of the plurality of spherical wheels 308 may be configured to provide grip to each of the plurality of spherical wheels 308 on the textured surface 400 of the omnidirectional wheel 300 for moving the omnidirectional wheel 300. For example, the textured surface 402 of each spherical wheel 308 may have a shape that corresponds to the textured surface 400 of the omnidirectional wheel 300 such that the textured surfaces 402, 400 mesh with each other and the spherical wheels 308 can drive the omnidirectional wheel 300. In some embodiments, each of the plurality of spherical wheels 308 may be coupled with a first motor (not shown). In some embodiments, the first motor may be configured to rotate at least one of the spherical wheel of the plurality of spherical wheels 308. In some embodiments, the first motor may be configured to rotate the at least one spherical wheel on a horizontal axis. In some embodiments, the plurality of spherical wheels 308 of each of the plurality of linking rods 306 may be configured to provide rotation to the omnidirectional wheel 300 on the horizontal axis.

In some embodiments, the spherical wheel assembly 304 may further comprise a second motor (not shown). In some embodiments, the second motor may be positioned on a lower portion of the housing 200. In some embodiments, the second motor may correspond to an alternate current (AC) motor or a direct current (DC) motor. In some embodiments, the second motor may be collectively coupled to the first motor, the plurality of linking rods 306 and the plurality of spherical wheels 308. In some embodiments, the second motor of the spherical wheel assembly 304 may be configured to selectively rotate the plurality of linking rods 306 and the plurality of spherical wheels 308 on a vertical axis. In some embodiments, the second motor of the spherical wheel assembly 304 may be configured to rotate the plurality of linking rods 306 and the plurality of spherical wheels 308 on the vertical axis to change the rotational movement of the omnidirectional wheel 300.

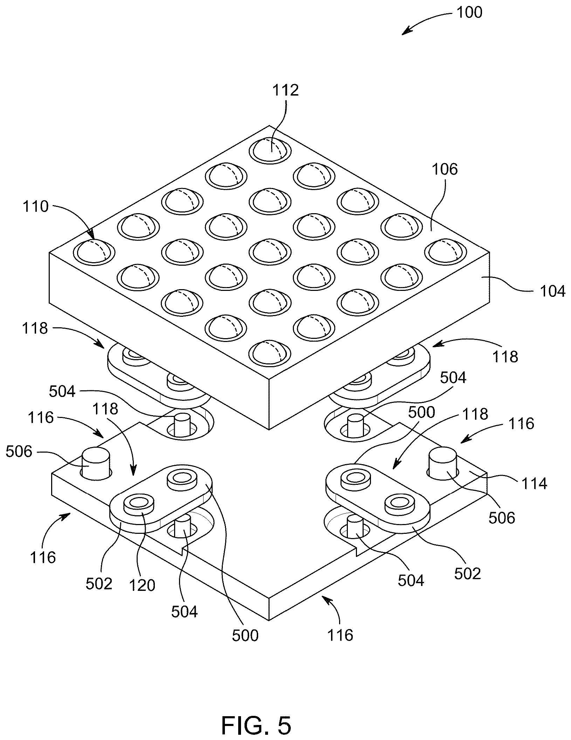

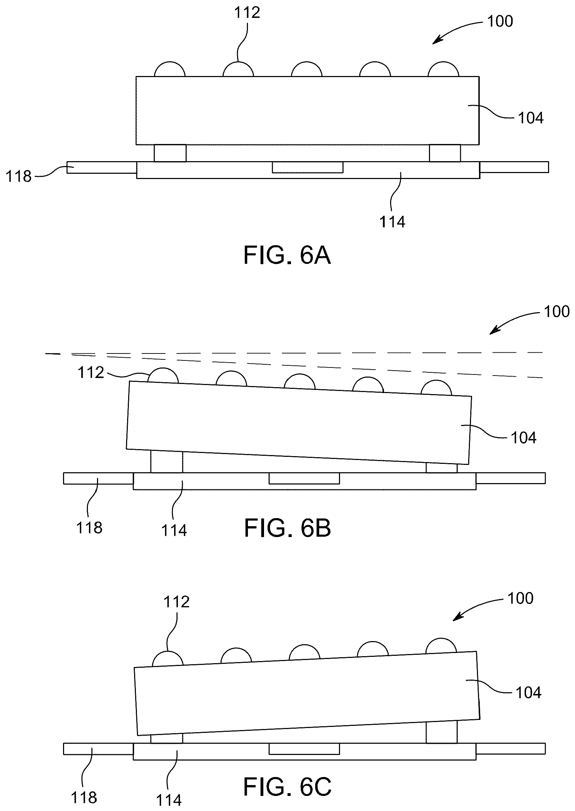

FIG. 5 illustrates an exploded view of a conveyor module 100 of the conveyor system 700, in accordance with an example embodiment of the present disclosure. FIGS. 6A-6C illustrates adjustment of a tilt angle of the conveyor module 100 of the conveyor system 700 of FIG. 5, in accordance with an example embodiment of the present disclosure.

In some embodiments, the conveyor system 700 may comprise the plurality of conveyor modules. In some embodiments, each conveyor module 100 may be coupled with at least one other, such as one, two, three, or four other conveyor modules 100 through the plurality of connectors 118. In some embodiments, each of the conveyor module 100 may comprise the first plate 104 and the second plate 114. Further, the second plate 114 of the plurality of conveyor modules may comprise the plurality of sides 116. In some embodiments, each side of each of the conveyor module 100 may comprise the plurality of connectors 118. In some embodiments, each of the plurality of connectors 118 may comprise the at least two adjustable rings 120. In some embodiments, each of the plurality of connectors 118 may comprise a first end 500 and a second end 502. In some embodiments, each of the first end 500 and the second end 502 of the plurality of connectors 118 may comprise one of the at least two adjustable rings 120. In some embodiments, one of the two adjustable rings 120 of the plurality of connectors 118 may be connected to the second plate 114 of the conveyor module 100.

In some embodiments, the second plate 114 of the conveyor module 100 may comprise a plurality of protrusions 504. In some embodiments, each of the plurality of connectors 118 may be configured to engage with one of the plurality of protrusions 504. In some embodiments, the at least two adjustable rings 120 of the plurality of connectors 118 may facilitate in coupling of the plurality of connectors 118 with the second plate 114 of the conveyor module 100. In some embodiments, an another ring of the two adjustable rings 120 of the plurality of connectors 118 may be connected to the second plate 114 of the another conveyor module 100. In some embodiments, the second plate 114 of the another conveyor module 100 may comprise another plurality of protrusions 504. In some embodiments, each of the plurality of connectors 118 may be configured to engage with one of the another plurality of protrusions 504, through the another ring of the at least two adjustable rings 120.

In some embodiments, each of the conveyor module 100 may comprise at least one tilt sensor (not shown). In some embodiments, the at least one tilt sensor may be configured to measure a tilt angle of the floor of the facility 800. In some embodiments, the at least one tilt sensor may be configured to transceive one or more signals (e.g., one or more infrared (IR) signals, one or more ultrasonic signal, etc.) to measure the tilt angle of the floor of the facility. In various examples, the conveyor system 700 may comprise a control unit (not shown) that may be communicatively coupled to the at least one tilt sensor. In some embodiments, the at least one tilt sensor may be configured to transmit the one or more signals received to the control unit. In some embodiments, the control unit may be configured to process and determine the tilt angle of the floor based at least on the one or more signals received. In some embodiments, the at least one tilt sensor may correspond to at least one of a capacitive tilt sensor, an accelerometer-based tilt sensor, hydrostatic tilt sensor, optical tilt sensor, etc.

In some embodiments, each of the conveyor module 100 may comprise an actuator 506. Further, the actuator 506 may be positioned at each corner of the second plate 114. In some embodiments, the actuator 506 may be positioned in contact with the lower surface of the first plate 104. In some embodiments, the actuator 506 may correspond to a telescopic actuator, a motorized actuator, a magnetic actuator, etc. In some embodiments, each of the actuator 506 may be communicatively coupled to the control unit. In some embodiments, the control unit may be configured to provide one or more commands to each of the actuator 506 of each of the conveyor module 100. In some embodiments, the actuator 506 that may be configured to extend or retract. In some embodiments, the actuator 506 that may be configured to adjust an angle of the first plate 104 based at least on signals generated by the at least one tilt sensor. In some embodiments, the actuator 506 that may be positioned at each corner of the second plate 114 may be configured to adjust the angle of the first plate 104 to ensure a stabilized movement of the one or more objects 802 over the plurality of conveyor modules.

FIGS. 7A-7C illustrate height adjustment of the plurality of conveyor modules of the conveyor system 700, in accordance with an example embodiment of the present disclosure.

In some embodiments, the conveyor system 700 may comprise the plurality of conveyor modules. In some embodiments, each of the conveyor module 100 may be configured to be lifted up to a certain height, based on specific applications (e.g., placement or withdrawal of the one or more objects 802 from a plurality of shelves 804 of an inventory). In some embodiments, each of the conveyor module 100 may comprise a plurality of motorized tracks 702, and a plurality of lifting arms 704. In some embodiments, the second plate 114 of each of the conveyor module 100 may comprise the plurality of motorized tracks 702. In some embodiments, each of the plurality of sides 116 of the second plate 114 may comprise a specific motorized track of the plurality of motorized tracks 702. In some embodiments, each of the plurality of motorized tracks 702 may be positioned on a different side of the second plate 114.

In some embodiments, each lifting arm of the plurality of lifting arms 704 may be coupled to a respective motorized track and to the second surface of the first plate 104. In some embodiments, each lifting arm of the plurality of lifting arms 704 may be sandwiched between the second surface of the first plate 104 and the respective motorized track. In some embodiments, each of the motorized track may be configured to move the plurality of lifting arms 704 to vertically lift the first plate 104 to adjust height of the conveyor module 100. In some embodiments, the plurality of motorized track of each of the plurality of conveyor modules may be configured to provide a lateral movement to the plurality of lifting arms 704 to lift the first plate 104 to adjust height of the conveyor module 100. In various examples, each of the plurality of lifting arms 704 may comprise a plurality of link rods and a plurality of pin joints arranged in a scissor arrangement. Further, the scissor arrangement may be configured to convert the lateral movement of the plurality of lifting arms 704 into a vertical movement of the conveyor module 100.

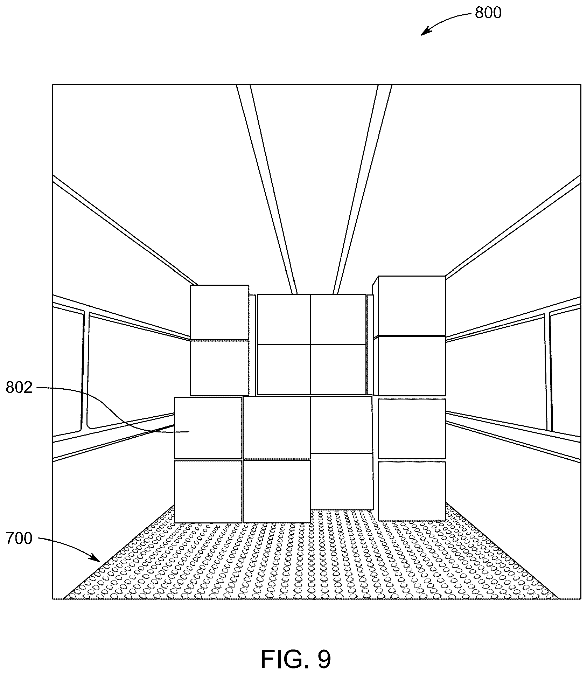

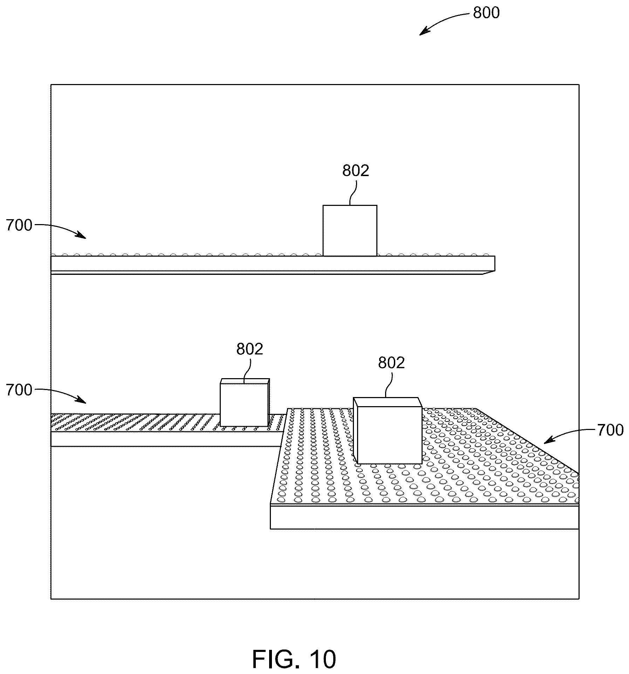

FIGS. 8A-8B illustrate a first application of the conveyor system 700, in accordance with a first example embodiment of the present disclosure. FIG. 9 illustrates a second application of the conveyor system 700, in accordance with a second example embodiment of the present disclosure. FIG. 10 illustrates a third application of the conveyor system 700, in accordance with a third example embodiment of the present disclosure.

In some embodiments, the conveyor system 700 may be installed within the facility 800. Further, the facility 800 may correspond to an inventory. In some embodiments, the facility 800 may be configured to store or manage the one or more objects 802. In some embodiments, the facility 800 may comprise a plurality of shelves 804, as illustrated in FIG. 8A. In some embodiments, each of the plurality of shelves 804 may be configured to store the one or more objects 802. In some embodiments, the floor of the facility 800 may be installed with the conveyor system 700. In some embodiments, the conveyor system 700 may comprise the plurality of conveyor modules. In some embodiments, each of the plurality of conveyor modules may be configured to transfer the one or more objects 802 to the one or more directions within the facility 800.

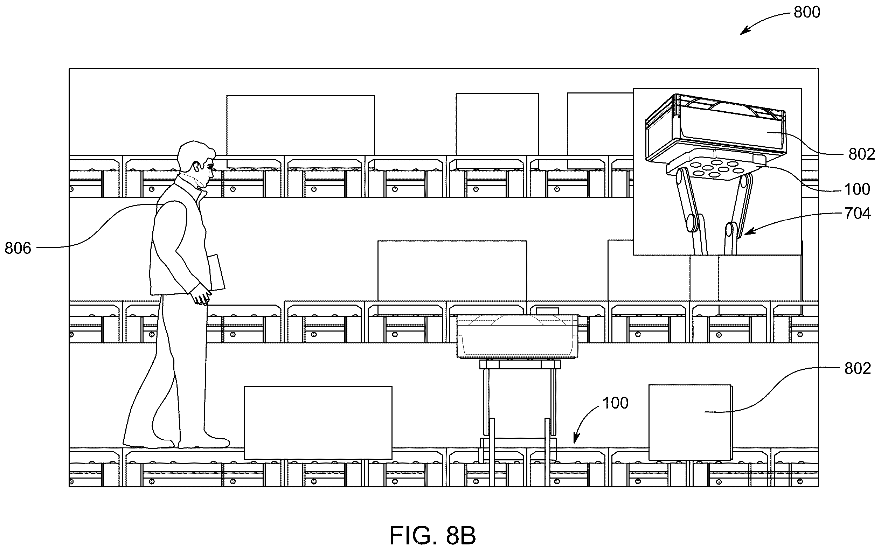

As illustrated in FIG. 8B, the conveyor system 700 may provide universal transport for the one or more objects 802 placed at different heights and a different height within the plurality of shelves 804. As a result, a user may be allowed to easily pick up the one or more objects 802. Further, each of the plurality of conveyor modules of the conveyor system 700 may comprise the plurality of motorized tracks 702 and the plurality of lifting arms 704 that may facilitate the user to easily pick or place the one or more objects 802. As illustrated in FIG. 9, the conveyor system 700 may be installed within the facility 800. The facility 800 may correspond to a container contained with the one or more objects 802. Further, the conveyor system 700 may be installed on a floor of the container. In some embodiments, the conveyor system 700 may be configured to transfer the one or more objects 802 in the one or more directions within the facility 800. As illustrated in FIG. 10, the facility 800 may correspond to a multi-level production line of a manufacturing plant. Further, the conveyor system 700 may be installed on the multi-level production line. In some embodiments, the conveyor system 700 may be configured to transfer the one or more objects 802 in the one or more directions over the multi-level production line.

The present invention may offer omnidirectional movement, which enhances maneuverability in confined spaces and streamlines transport of the one or more objects 802. In the present invention, automated height adjustment through the plurality of conveyor modules, actuator 506 and the at least one tilt sensor, may ensure optimal leveling on uneven surfaces, thereby safeguarding the one or more objects 802 during transit. Additionally, the gear assembly 202 and the spherical wheel assembly 304 of the plurality of conveyor modules may facilitate smooth and efficient movement of the one or more objects 802, reducing the reliance on manual labor. The design of the present invention may allow for customizable configurations through coupling of each of the conveyor modules 100 through the plurality of connectors 118. Finally, in the present invention, the plurality of conveyor modules of the conveyor system 700 may not only improve efficiency but also significantly lowers labor costs, freeing up personnel for more critical tasks.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A conveyor system comprising:
a plurality of conveyor modules, wherein each of the plurality of conveyor modules comprises:
a first plate comprising:
a first surface defining a plurality of cavities; and
a plurality of omnidirectional wheel assemblies that each comprise an omnidirectional wheel that is positioned within a respective cavity of the plurality of cavities and configured to transfer one or more objects in one or more directions; and
a second plate coupled to a second surface of the first plate, wherein the second plate comprises:
a plurality of sides; and
a plurality of connectors, each connector coupled to a respective side of the plurality of sides, wherein each connector is configured to detachably attach a conveyor module with another conveyor module of the plurality of conveyor modules.

2. The conveyor system of claim 1, wherein the first plate corresponds to an upper plate and the second plate corresponds to a lower plate.

3. The conveyor system of claim 1, wherein each connector comprises at least two adjustable rings, wherein one of the at least two adjustable rings is connected to the second plate of the conveyor module and another of the at least two adjustable rings is connected to a second plate of the another conveyor module.

4. The conveyor system of claim 1, wherein each of the plurality of omnidirectional wheel assemblies comprises:
a housing, wherein the omnidirectional wheel is positioned partially within the housing; and
a gear assembly or a spherical wheel assembly to provide rotational movement to the omnidirectional wheel.

5. The conveyor system of claim 4, wherein:
each of the plurality of omnidirectional wheel assemblies comprises the gear assembly,
the gear assembly comprises a first motor that is configured to rotate a gear, and
the gear is configured to rotate the omnidirectional wheel on a horizontal axis.

6. The conveyor system of claim 5, wherein:
the first motor, the gear, and the omnidirectional wheel are vertically aligned, and
each of the plurality of omnidirectional wheel assemblies comprises a second motor that is configured to collectively rotate the first motor, the gear, and the omnidirectional wheel on a vertical axis.

7. The conveyor system of claim 5, wherein each of the plurality of omnidirectional wheels comprise an indentation, wherein each gear is configured to mesh with the indentation of a respective omnidirectional wheel.

8. The conveyor system of claim 4, wherein each of the plurality of omnidirectional wheel assemblies comprises the spherical wheel assembly, and wherein the spherical wheel assembly comprises:
a plurality of linking rods;
a plurality of spherical wheels, each of the plurality of spherical wheels being rotatably coupled to a respective linking rod; and
a first motor configured to rotate at least one of the spherical wheels,
wherein the plurality of linking rods are radially positioned within the housing to form a base for the omnidirectional wheel.

9. The conveyor system of claim 8, wherein the at least one of the spherical wheels that is configured to be rotated by the first motor is configured to rotate on a horizontal axis, and wherein the spherical wheel assembly comprises a second motor that is configured to collectively rotate the plurality of linking rods and the plurality of spherical wheels on a vertical axis.

10. The conveyor system of claim 8, wherein each of the spherical wheels have a textured surface that corresponds to a textured surface of the omnidirectional wheel that is configured to provide a grip for moving the omnidirectional wheel.

11. The conveyor system of claim 1, wherein each of the plurality of conveyor modules comprises:
an actuator positioned at each corner of the second plate and in contact with a lower surface of the first plate; and
at least one tilt sensor, wherein the actuator at each corner of the second plate is configured to adjust an angle of the first plate based at least on signals generated by the at least one tilt sensor.

12. The conveyor system of claim 1, wherein each of the plurality of conveyor modules comprises:
a plurality of motorized tracks, each motorized track being positioned on a different side of the second plate; and
a plurality of lifting arms, each lifting arm being coupled to a respective motorized track and to the second surface,
wherein the motorized tracks are configured to move the plurality of lifting arms to vertically lift the first plate to adjust height of the conveyor module.

13. A method comprising:
coupling a second plate to a second surface of a first plate to form a conveyor module, wherein:
the first plate comprises:
a first surface defining a plurality of cavities; and
a plurality of omnidirectional wheel assemblies that each comprise an omnidirectional wheel that is positioned within a respective cavity of the plurality of cavities and configured to transfer one or more objects in one or more directions; and
the second plate comprises:
a plurality of sides; and
a plurality of connectors, each connector coupled to a respective side of the plurality of sides, wherein each connector is configured to detachably attach a conveyor module with another conveyor module of the plurality of conveyor modules.

14. The method of claim 13, wherein the first plate corresponds to an upper plate and the second plate corresponds to a lower plate.

15. The method of claim 13, wherein each connector comprises at least two adjustable rings, wherein the method further comprises connecting one of the at least two adjustable rings to the second plate of the conveyor module and another of the at least two adjustable rings to a second plate of the another conveyor module.
